# EUROPEAN PATENT APPLICATION

(11) **EP 4 468 797 A1**
(43) Date of publication of application: **27.11.2024**
(21) Application number: 24172601.7
(22) Date of filing: 26.04.2024
(51) Int. Cl.: H04W 64/00, H04W 88/06

(54) **TRANSITIONING OPERATING STATE IN A POSITIONING PROCESS**

(30) Priority: 02.05.2023 GB 202306423
(71) Applicant: Nokia Technologies Oy, 02610 Espoo (FI)
(72) Inventor: BARBU, Oana-Elena, Aalborg (DK); KESHAVAMURTHY, Prajwal, Munich (DE); MICHALOPOULOS, Diomidis, Munich (DE)
(74) Representative: Nokia EPO representatives

(57) **Abstract**

An apparatus, method and computer program is disclosed relating to positioning. For example, the apparatus may comprise means for operating the apparatus in a first operating state of a plurality of predetermined operating states as part of a positioning process involving communications with one or more remote nodes. The apparatus may also comprise means for identifying one or more trigger events and means for selecting a different one of the operating states, based at least on: the first operating state, and the presence or absence of one or more trigger events. The apparatus may transition from the first operating state to the selected different operating state, wherein the plurality of predetermined operating states may comprise a target state, an anchor state, a positioning reference unit (PRU) state, and a standby state.

## Description

### Field

Example embodiments describe an apparatus, method and computer program relating to positioning.

### Background

In radio systems, it may be important to determine the geographic position (hereafter "position") of one or more target devices that may change position over time. For example, a target device may be a user equipment (UE) such as a mobile telephone, smartphone, or vehicle. For example, knowing the position of a particular UE may be useful for performing optimization of radio resources, provision of location-based services, guidance and/or alert generation. The 3rd Generation Partnership Project (3GPP) has developed various standards and proposals relating to positioning of target devices via various methods based on, for example, fourth and fifth generation (4G and 5G) radio access technologies (RATs) and also future RAT technologies. Some positioning techniques rely on the target device communicating with a plurality of so-called anchor devices, which may be fixed location transmit receive points (TRPs) having a location that is known to part of the core network, e.g. by a location management function (LMF).

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, the apparatus comprising: means for operating the apparatus in a first operating state of a plurality of predetermined operating states as part of a positioning process involving communications with one or more remote nodes; means for identifying one or more trigger events; means for selecting a different one of the operating states, based at least on: the first operating state, and the presence or absence of one or more trigger events; and means for transitioning from the first operating state to the selected different operating state, wherein the plurality of predetermined operating states comprise at least a target state, an anchor state, a positioning reference unit (PRU) state, and a standby state.

At least one of the one or more trigger events may represent, at least in part, a request from, or a requirement of, at least one of the one or more remote nodes

The selecting means may be configured to select the different operating state based, at least in part, on a predetermined priority order associated with the plurality of predetermined operating states.

In some examples, in the event that the first operating state is not the target state and the one or more trigger events represent at least: a first request or requirement to transition to the target state, and a second request or requirement to transition to a state other than the target state, the selecting means may be configured to prioritise transition to the target state over the other state or states.

In some examples, in the event that the first operating state is the target state and the one or more trigger events represent at least: a first request or requirement to transition to the anchor state, and a second request or requirement to transition to the PRU state, the selecting means may be configured to prioritise transition to the anchor state over the PRU state.

In some examples, in the event that the first operating state is one of the target, anchor and PRU states, and in the absence of one or more trigger events representing a request or requirement to transition to a different one of said states, the selecting means may be configured to prioritise transition to the standby state.

In some examples, the apparatus may be configured, in the standby state, to advertise to the one or more other remote nodes its availability to transition to one of the other operating states.

In some examples, the selecting means may be configured to select a different state, of the plurality of predetermined operating states, at a plurality of different times within a predetermined service period *Y.*

In some examples, the apparatus may further comprise means for determining the predetermined service period *Y* substantially at the end of a positioning session in which the apparatus operated in the target state and its position has been determined.

In some examples, the apparatus may further comprise means for determining a first counter *C* indicative of a number of transitions to any of the anchor and PRU states within a predetermined time window *X* of the predetermined service period *Y,* and wherein the transitioning means may be configured to transition to a selected anchor state or a selected PRU state if the value of the first counter *C* does not exceed a predetermined maximum value *Cmax.*

In some examples, the apparatus may further comprise means for determining a second counter *Da* indicative of a time period in which the apparatus has operated in the anchor state in the predetermined service period *Y,* and wherein the transitioning means is configured to transition to a selected anchor state if the value of the second counter *Da* does not exceed a predetermined maximum value *Damax.*

In some examples, the apparatus may further comprise means for determining a third counter *Dp* indicative of a time period in which the apparatus has operated in the PRU state in the predetermined service period *Y,* and wherein the transitioning means is configured to transition to a selected PRU state if the value of the third counter *Dp* does not exceed a predetermined maximum value *Dpmax.*

In some examples, the apparatus may further comprise: means for determining a fourth counter *Dap* indicative of a total time period in which the apparatus has operated in any of the anchor and PRU states within a predetermined time window *Z* of the predetermined service period *Y,* and wherein the transitioning means is configured to transition from the anchor state or the PRU state to the standby state if the value of the fourth counter *Dap* exceeds a predetermined maximum value *Dapmax.*

In some examples, the transitioning means may be further configured to prevent subsequent transition from the standby state to any of the anchor and PRU states within a predetermined window *K.*

In some examples, the positioning process may be a sidelink (SL) positioning process.

In some examples, the apparatus may comprise a user equipment.

According to a second aspect, there is described a method comprising: operating an apparatus in a first operating state of a plurality of predetermined operating states as part of a positioning process involving communications with one or more remote nodes; identifying one or more trigger events; selecting a different one of the operating states, based at least on: the first operating state, and the presence or absence of one or more trigger events; and transitioning from the first operating state to the selected different operating state, wherein the plurality of predetermined operating states comprise at least a target state, an anchor state, a positioning reference unit (PRU) state, and a standby state.

In some examples, at least one of the one or more trigger events may represent, at least in part, a request from, or a requirement of, at least one of the one or more remote nodes

In some examples, the selecting of the different operating state may be based, at least in part, on a predetermined priority order associated with the plurality of predetermined operating states.

In some examples, in the event that the first operating state is not the target state and the one or more trigger events represent at least: a first request or requirement to transition to the target state, and a second request or requirement to transition to a state other than the target state, the selecting of the different operating state may prioritise transition to the target state over the other state or states.

In some examples, in the event that the first operating state is the target state and the one or more trigger events represent at least: a first request or requirement to transition to the anchor state, and a second request or requirement to transition to the PRU state, the selecting of the different operating state may prioritise transition to the anchor state over the PRU state.

In some examples, in the event that the first operating state is one of the target, anchor and PRU states, and in the absence of one or more trigger events representing a request or requirement to transition to a different one of said states, the selecting of the different operating state may prioritise transition to the standby state.

In some examples, the method may comprise, when in the standby state, advertising to the one or more other remote nodes an availability of the apparatus to transition to one of the other operating states.

In some examples, the method may comprise selecting a different state, of the plurality of predetermined operating states, at a plurality of different times within a predetermined service period *Y.*

In some examples, the method may further comprise determining the predetermined service period *Y* substantially at the end of a positioning session in which the apparatus operated in the target state and its position has been determined.

In some examples, the method may further comprise determining a first counter *C* indicative of a number of transitions to any of the anchor and PRU states within a predetermined time window *X* of the predetermined service period *Y,* and wherein the transitioning comprises transitioning to a selected anchor state or a selected PRU state if the value of the first counter *C* does not exceed a predetermined maximum value *Cmax.*

In some examples, the method may further comprise determining a second counter *Da* indicative of a time period in which the apparatus has operated in the anchor state in the predetermined service period *Y,* and wherein the transitioning comprises transitioning to a selected anchor state if the value of the second counter *Da* does not exceed a predetermined maximum value *Damax.*

In some examples, the method may further comprise determining a third counter *Dp* indicative of a time period in which the apparatus has operated in the PRU state in the predetermined service period *Y,* and wherein the transitioning comprises transitioning to a selected PRU state if the value of the third counter *Dp* does not exceed a predetermined maximum value *Dpmax.*

In some examples, the method may further comprise determining a fourth counter *Dap* indicative of a total time period in which the apparatus has operated in any of the anchor and PRU states within a predetermined time window *Z* of the predetermined service period *Y,* and wherein the transitioning comprises transitioning from the anchor state or the PRU state to the standby state if the value of the fourth counter *Dap* exceeds a predetermined maximum value *Dapmax.*

In some examples, the method may further comprise preventing subsequent transition from the standby state to any of the anchor and PRU states within a predetermined window *K.*

In some examples, the positioning process may be a sidelink (SL) positioning process.

In some examples, the method may be performed by an apparatus which may comprise a user equipment.

According to a third aspect, there is provided a computer program product comprising a set of instructions which, when executed on an apparatus, is configured to cause the apparatus to carry out the method of: operating in a first operating state of a plurality of predetermined operating states as part of a positioning process involving communications with one or more remote nodes; identifying one or more trigger events; selecting a different one of the operating states, based at least on: the first operating state, and the presence or absence of one or more trigger events; and transitioning from the first operating state to the selected different operating state, wherein the plurality of predetermined operating states comprise at least a target state, an anchor state, a positioning reference unit (PRU) state, and a standby state.

Optional features of the third aspect may comprises any features of the second aspect.

According to a fourth aspect, there is provided a non-transitory computer readable medium comprising program instructions stored thereon for performing a method, comprising: operating an apparatus in a first operating state of a plurality of predetermined operating states as part of a positioning process involving communications with one or more remote nodes; identifying one or more trigger events; selecting a different one of the operating states, based at least on: the first operating state, and the presence or absence of one or more trigger events; and transitioning from the first operating state to the selected different operating state, wherein the plurality of predetermined operating states comprise at least a target state, an anchor state, a positioning reference unit (PRU) state, and a standby state.

The program instructions of the fourth aspect may also perform operations according to any preceding method definition of the second aspect.

According to a fifth aspect, there is provided an apparatus comprising: at least one processor; and at least one memory including computer program code which, when executed by the at least one processor, causes the apparatus to: operate an apparatus in a first operating state of a plurality of predetermined operating states as part of a positioning process involving communications with one or more remote nodes; identify one or more trigger events; select a different one of the operating states, based at least on: the first operating state, and the presence or absence of one or more trigger events; and transition from the first operating state to the selected different operating state, wherein the plurality of predetermined operating states comprise at least a target state, an anchor state, a positioning reference unit (PRU) state, and a standby state.

The computer program code of the fifth aspect may also perform operations according to any preceding method definition of the second aspect.

### Brief Description of Drawings

Example embodiments will now be described by way of non-limiting example, with reference to the accompanying drawings, in which:
FIG. 1 is a schematic view of an example communications system;
FIG. 2 is a schematic view of another example communications system;
FIG. 3 is a state transition diagram according to one or more example embodiments;
FIG. 4 is a flow diagram of operations according to one or more example embodiments;
FIG. 5 is a schematic view of an apparatus according to one or more example embodiments, including functional modules;
FIG. 6 is a further flow diagram of operations according to one or more example embodiments;
FIG. 7 is a further flow diagram of operations according to one or more example embodiments;
FIG. 8 is a signal timing diagram, showing signalling between nodes according to one or more example embodiments;
FIG. 9 is a schematic view of an apparatus according to one or more example embodiments, which may comprise a user equipment; and
FIG. 10 shows a non-transitory media according to one or more example embodiments.

### Detailed Description

Example embodiments relate to positioning. Example embodiment describe an apparatus, method and computer program relating to a positioning process involving communications between a plurality of nodes.

In radio systems, it may be important to determine a geographic position (hereafter "position") of one or more devices that may change position. Future communications systems and networks may place high importance on knowing the position of particular devices, for example for the purposes of optimization of radio resources, provision of location-based services, availability, guidance and alert generation, to give some examples. The 3rd Generation Partnership Project (3GPP) has developed various standards and proposals relating to positioning of devices via various methods based on, for example, fourth and fifth generation (4G and 5G) radio access technologies (RATs) and also future RAT technologies.

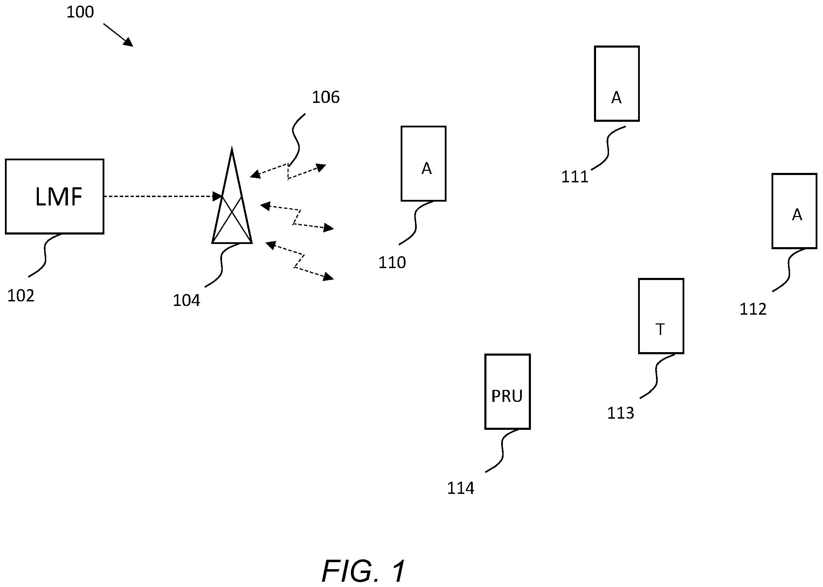

Referring to FIG. 1, an example communication system 100 may comprise a plurality of nodes, including a network node 102, a base station 104, and first to fifth other nodes 110-114 which are remote from the network node 102 and the base station 104.

The other nodes 110-114 may be examples of user equipment (UE) and for ease of explanation the term UE will be used hereinafter. It should, however, be appreciated that the nodes may comprise other forms of device, for example other base stations or servers which are part of, or associated with, a radio access network (RAN).

A UE may be a smartphone, tablet computer, other form of computer, a vehicle, or wearable device, to give some examples.

The network node 102 may comprise part of a core network and may communicate with the plurality of UEs 110-114 via the base station 104, via uplink or downlink connections, as indicated generally by arrows 106. The network node 102 may be a location management function (LMF) or similar. In some examples, the base station 104 may perform the role of the network node.

The plurality of UEs 110-114 may also communicate directly with one another without the need to communicate via the base station 104. For example, the plurality of Ues 110-114 may communicate via respective sidelinks.

Sidelinks (SLs) sometimes referred to as LTE sidelinks, have been introduced in 3GPP release 16 to facilitate direct communication between nearby Ues. Sidelink positioning has been introduced in 3GPP release 18. As used herein, the term sidelink may refer to any direct communication between Ues and is not restricted to LTE sidelinks and may, as an example alternative, comprise New Radio (NR) sidelinks.

At a given time, the network node 102 may need to determine the position of one of the Ues 110-114, for example the fourth UE 113. The fourth UE 113 may be termed a target node or target UE on the basis that its position is to be determined. Alternatively, or additionally, the fourth UE 113 may request that its own position be determined. The fourth UE 113 may report its own position, when determined, to the network node 102. Alternatively, or additionally, one of the other Ues 110, 111, 112, 114 may request that the position of the fourth UE 113 be determined.

To assist with determining the position of the fourth UE 113, the network node 102 may select a plurality of the other Ues 110, 111, 112, 114, in the context of a positioning process, to operate as so-called anchor Ues.

For example, the network node 102 may select the first, second and third Ues 110-112 to operate in an anchor operating state.

A UE operating in the anchor operating state may be termed an anchor UE, at least for the duration that it is operating in the anchor operating state.

An anchor UE has a known position, or a position known with sufficient accuracy, and in the anchor operating state provides as part of the positioning process assistance to one or more target Ues, here the fourth UE 113. An anchor UE may transmit reference signals or may receive reference signals.

For example, in a downlink (DL) -like sidelink positioning process, an anchor UE, e.g. the first UE 110, may transmit a reference signal, e.g. a positioning reference signal (PRS, or SL-PRS), to the target UE 113. The target UE 113 may, based on information as to the anchor UE's known position and at least the time of receipt of the PRS, determine a range with respect to the particular anchor UE 110.

Alternatively, in an uplink (UL) -like sidelink positioning process, an anchor UE 110 may receive a reference signal, e.g. a positioning reference signal (PRS or SL-PRS), transmitted by the target UE 113. Based on information as to the anchor UE's known position, and at least the time of receipt of the PRS, the anchor UE can determine a range with respect to the particular target UE 113.

Based on the known position and range information with respect to three or more anchor Ues 110-112, the position of the target UE 113 may be determined using known multilateration methods. Such methods may employ time difference of arrival (TdoA), reference signal time difference (RSTD), reference signal received power (RSRP) or other methods. It is assumed the reader is familiar with general positioning concepts and multilateration.

It will be appreciated that a particular set or group of anchor UEs may provide positioning assistance to more than one target UE at a given time.

Further assistance may be provided by one or more of the other Ues 110, 111, 112, 114 not selected as anchor nodes. For example, the network node 102 may select the fifth UE 114 to operate in s so-called positioning reference unit (PRU) operating state.

A UE operating in the PRU operating state may be termed a PRU UE. A PRU UE is a UE that provides assistance in the positioning process, but is different from anchor Ues.

A PRU UE is a node with a known position, or a position known with sufficient accuracy, which computes positioning-related correction data, and possibly assistance data. The correction data can be provided to any node that estimates, or will estimate, the position of a target UE. For example, correction data may be provided to one or more of a network node, e.g. LMF 102, a server UE, or the target UE itself (if it is estimating its own position) for 10nabling the initial position estimate of the target UE (e.g. the initial position based on communications with the anchor Ues.)

In the case where a target UE is estimating its own positon, I correction data provided by the one or more PrU UEs may assist the target UE in correcting its own position measurements. In the more general case, the correction data provided by the one or more PrU UEs may assist any other node estimating the position of a target UE in correcting said other node's estimate of said target UE's position.

For example, the PRU UE 114 may receive DL reference signals from the same anchor UEs 110-112 that the target UE 113 used or is using to determine its own position as part of a positioning session. Because the PRU UE 114 knows its own position, it can determine or estimate inaccuracies between said position and a position calculated using reference signals from said anchor UEs 110-112. The PRU UE 114 can determine correction data to compensate for the inaccuracy, which it may then send to the target UE 114. The target UE 114 can therefore update its position.

It will be appreciated that a particular PRU UE may provide positioning assistance to more than one target UE at a given time.

In the communication system 100 shown in FIG. 1, the network node 102 may assign and de-assign anchor and PRU operating states to UEs.

For example, the network node 102 may activate and/or deactivate a certain number of UEs to operate in the anchor operating state and a certain number of UEs to operate in the PRU operating state for a given geographical region.

This may achieve some form of balance between resource efficiency and signalling overhead associated with, for example, transmitting PRSs by anchor UEs and transmitting correction data by PrU UEs. Computational power used by PrU UEs may also be taken into account.

In some situations, there may be no network node 102 that is aware in advance of all UEs that can serve, or assist, a particular target UE, for example the target UE 113. This may be the case in out-of-coverage scenarios.

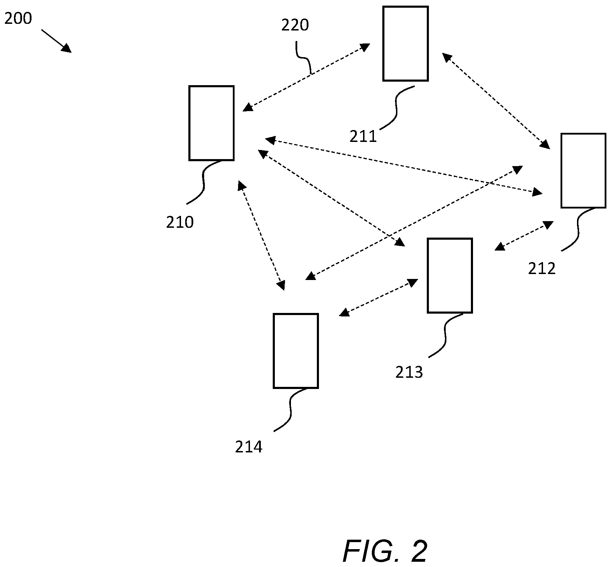

FIG. 2 shows another communication system 200 comprising first to fifth nodes 210-214 that may communicate as part of a positioning process. In other examples, there may be a greater number of nodes.

The first to fifth nodes 210-215 may be examples of user equipment (UE) which may communicate with one another via respective sidelinks 220 as part of a sidelink positioning process.

Again, it will be assumed for ease of reference that the first to fifth nodes 210-215 are UEs. Sidelinks 220 are indicated graphically by the dashed arrows. As shown, a this time there is no network node, e.g. LMF or basestation or other central entity, that is aware in advance of all said UEs 210-214 that can serve, or assist, a particular UE operating in the target operating state with a view to achieving a fair and resource-efficient allocation over time. This may be a temporary situation, in the sense that a network node cannot currently communicate with any or at least some of the UEs 210-215 to manage assignment and de-assignment of, for example, anchor and PRU operating states to particular UE.

Example embodiments may provide an apparatus, method and system for enabling nodes, e.g. UEs 210-215, individually to transition themselves from a first operating state to a different operating state based, at least in part, on the presence or absence of one or more trigger events and the first operating state.

In this way, it is possible to manage at least allocation and/or deallocation of anchor UEs and PrU UEs in a certain way, for example to achieve a fair and resource-efficient allocation over time, without the need for a central entity such as a network node to be in communication with, or aware in advance of, all UEs in a certain geographical area.

It may also help obtaining a critical mass of appropriately-configured UEs within a positioning session, e.g. sufficient number of anchor UEs and PrU UEs, and may incentivize UEs to assist peer UEs.

Example embodiments may focus on a sidelink positioning process, but this is not essential.

Example embodiments may be applicable to any communications system or scenario involving positioning where it may be beneficial for UEs to self-manage which one of a plurality of operating states they operate in at a given time.

Example embodiments may focus on the following operating states. In other examples, there may be more operating states.

UEs may determine to operate in one of a target operating state, anchor operating state, PRU operating state and standby operating state at a given time.

A target operating state refers to a state of a UE that requires localization. In other words, the UE requires its position to be determined using one or more known techniques such as those mentioned above, e.g. Toa, TDoA, RSRP etc. A UE operating in the target operating state may be known as a target UE.

An anchor operating state refers to a state of a UE with a known position that may transmit or receive reference signals for enabling determination of a target UE's absolute or relative position. A UE operating in the anchor operating state may be known as an anchor UE.

A PRU operating state refers to a state of a UE with a known position that may transmit correction data to any node (e.g. network node or UE) configured for estimating a target UE's position, which may for example include an LMF, server UE or the target UE itself to give some examples. The correction data enables said node to correct its initial positioning measurement for the target UE. In the case where the target UE is responsible for determining its own position, the correction data may enable the target UE to correct its own positioning measurement, e.g. based on reference signals transmitted to, or received from, one or more anchor UEs. A UE operating in the PRU operating state may be known as a PRU UE.

The above operating states may be referred to as "active" operating states in the sense that the UEs have a role to perform as part of a positioning process that involves signalling with one or more other UEs.

A standby operating state refers to a state of a UE that is not in one of the active operating states but is available, within an overall positioning session involving other UEs, to transition to one of the active operating states based on one or more trigger events.

A UE operating in the standby operating state may be known as a standby UE. A UE operating in the standby operating state may use less power than when operating in one of the active operating states.

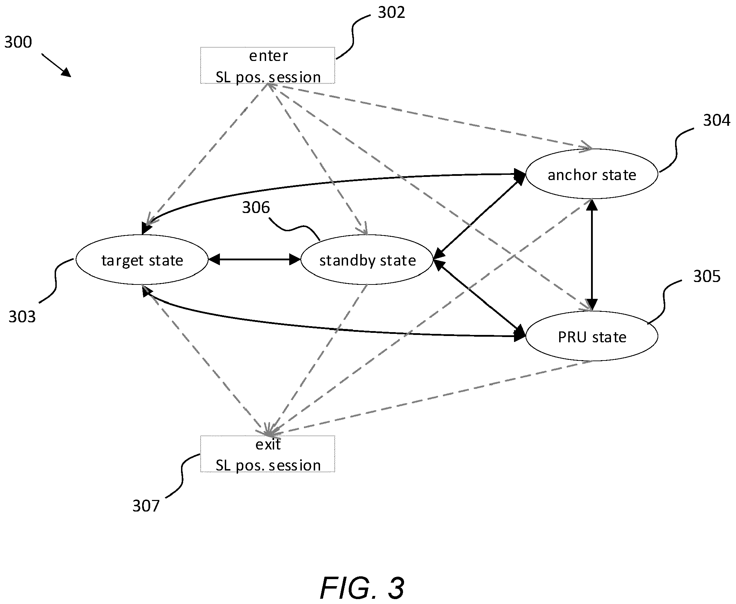

FIG. 3 is a state transition diagram 300 which may be useful for visualizing the different operating states.

An initial event 302 may comprise a particular UE (e.g. the fourth UE 213) entering, in this case, a sidelink positioning session which may last for a particular duration.

A particular UE may assume any one of the target operating state 303, anchor operating state 304, PRU state 305 and the standby state 306 and may transition from a current one of these operating states to any other operating state based, at least in part, on a selection criterion or criteria and its current operating state.

This may repeat for a number of iterations, if required, within a given time period. An end event 307 may comprise the particular UE exiting a sidelink positioning session at which time it is "released" from its role in potentially assisting other UEs as part of that sidelink positioning session.

For example, the initial event 302 may comprise determining that the particular UE 213 requires localization in which case the particular UE starts with the target operating state 303.

A predetermined priority order may be associated with each operating state, which may be used as part of the selection criterion or criteria.

The target operating state 303 may have the highest priority. That is, the selection criterion or criteria may determine that a UE not currently operating in the target operating state 303 can transition to the target operating state in the event of one or more trigger events, e.g. a request or requirement for the UE to transition to the target operating state. The transition may be immediate and may not require any pre-allowance or handshake from another UE or a network node (if there is coverage).

The anchor operating state 304 may have the next-highest priority. That is, the selection criterion or criteria may determine that a UE currently operating in one of the PRU or standby operating states 305, 307, or a UE in the target operating state 303 which has completed its own target positioning session, can transition to the anchor operating state. This may be in the event of one or more trigger events, e.g. a request or requirement to transition to the anchor operating state 304.

The PRU operating state 305 may have the next-highest priority. That is, the selection criterion or criteria may determine that a UE currently operating in the standby operating state 306, or a UE in the target operating state 303 which has completed its own target positioning session, or a UE in the anchor operating state 304 which is at the end of a predetermined anchor service period, can transition to the PRU operating state 305. This may be in the event of one or more trigger events, e.g. a request or requirement to transition to the PRU operating state 305.

The standby operating state 306 has the lowest priority.

It will be appreciated that, in the event of concurrent requests or requirements for a UE to transition to two or more different operating states, the above priority order may be applied.

For example, in the event that the current operating state is not the target state and the one or more trigger events represent at least:
a first request or requirement to transition to the target state 303, and
a second request or requirement to transition to a state other than the target state,
the target state may be selected over the other state or states.

For example, in the event that the first operating state is the target state 303 and the one or more trigger events represent at least:
a first request or requirement to transition to the anchor state 304, and
a second request or requirement to transition to the PRU state 305,
the selecting means is configured to prioritise transition to the anchor state over the PRU state.

In some examples, a UE operating in one of the active states, e.g. in the anchor operating state 304 may pre-agree to transition to another operating state, e.g. the PRU operating state 305, at a later time when it has completed its role in the anchor operating state, i.e. at the end of an anchor service period which may be pre-agreed between the UE and an entity, e.g. another UE or a network node that requested the UE to transition to the anchor operating state.

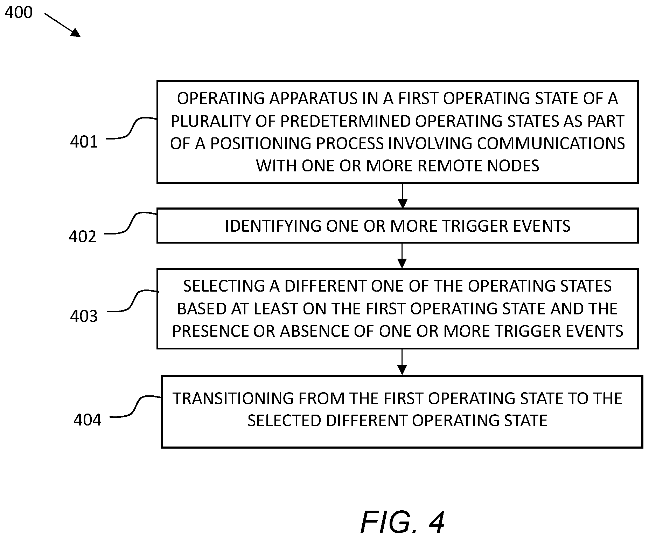

FIG. 4 is a flow diagram showing operations that may be performed according to one or more example embodiments. The operations may be performed by an apparatus, which may be a node, e.g. UE, involved in a positioning process which may involve communication with one or more other nodes, e.g. peer UEs. For example, the apparatus may comprise one, or respective ones, of the UEs 210 - 214 shown in FIG. 2. The operations may be performed by hardware, software, firmware or a combination thereof. The operations may be performed by one means, or respective, means, a means being any suitable means such as one or more processors or controllers in combination with computer-readable instructions provided on one or more memories, wherein the instructions, when executed on an apparatus, may be configured to perform the operations.

A first operation 401 may comprise operating the apparatus in a first operating state of a plurality of predetermined operating states as part of a positioning process involving communications with one or more remote nodes.

A second operation 402 may comprise identifying one or more trigger events.

A third operation 403 may comprise selecting a different one of the operating states based at least on the first operating state and the presence or absence of one or more trigger events.

A fourth operation 404 may comprise transitioning from the first operating state to the selected different operating state.

Regarding the second operation 402, a trigger event may be any identifiable or measurable event, associated with operation of a positioning system or process, known to indicate a required or requested transition to a different operating state.

A trigger event can be explicit or implicit. For example, a trigger event may be an explicit request from a network node or UE or an implicit requirement.

For example, in respect of a particular UE, a trigger event can comprise one or more of the following:
- an explicit request received from one or more "peer UEs" capable of communication with the particular UE.
   For example, an explicit request from the first UE 210 to the fourth UE 213 to transition to the anchor operating state 304 or the PRU operating state 305;
- an implicit request based on "learning" or "overhearing" that a peer UE is terminating or has completed its current operating state within the current positioning session.
- For example, the fourth UE 213 may terminate or complete its current role in the target operating state 303, the anchor operating state 304 or the PRU operating state 305. For example, the fourth UE 213 may advertise or broadcast said event upon termination or completion, and the other UEs 210, 211, 212, 214 can "learn" that the fourth UE 213 may be available to transition;
- an explicit request received from a network node, e.g. an LMU;
- expiry of one or more timers associated with the particular UE or one or more peer UEs.
   As explained below, certain timers may be associated with particular operating states to ensure that a particular UE does not operate as, for example, an anchor UE for longer than a predetermined period within a positioning session. Timers may count down to zero or count-up to a predetermined threshold for determining if the timer has expired.
- any other one or more identifiable or measurable events associated with a transition to a different operating state, that may be predetermined.

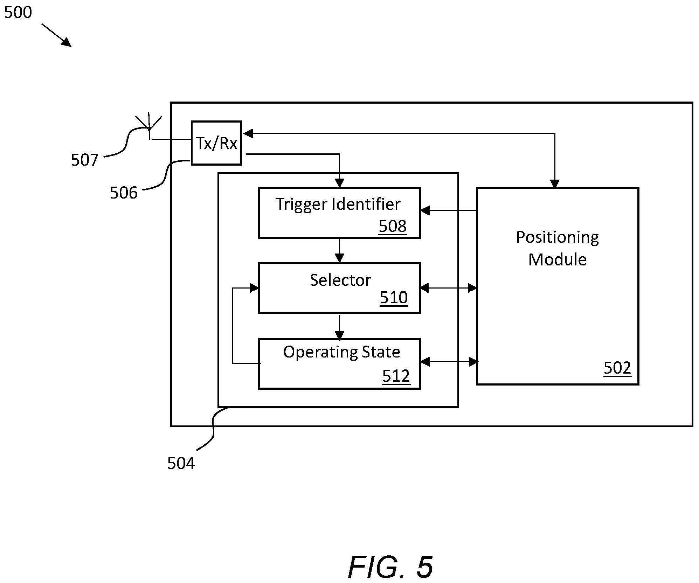

FIG. 5 is a block diagram showing functional modules of a node, e.g. an example UE 500 that may operate using the operations of FIG. 4 according to some example embodiments.

The UE 500 may comprise a positioning module 502, a state control module 504 and a transceiver 506 associated with one or more antennas 507.

The positioning module 502 may comprise hardware, software and/or firmware for operating the UE 500 in any of the above-mentioned operating states 303-306 using conventional methods. The positioning module 502 may also transition between any of the above-mentioned operating states 303-306 to perform a different respective role.

For example, when operating in the target operating state 303, the positioning module 502 may control transmitting and/or receiving of reference signals, e.g. PRSs with respect to anchor UEs.

In a DL -like sidelink positioning method, the positioning module 502 may determine a current position of the UE 500. The positioning module 502 may also receive correction data from a node operating in the PRU operating state 305.

In an UL -like sidelink positioning method, the positioning module 502 may receive, from another node, e.g. a network node or an anchor UE, a determination of its current position.

For example, when transitioned to the anchor operating state 304, the positioning module 502 may store its own position and transmit or receive reference signals to or from a UE operating in the target operating state.

For example, when transitioned to the PRU operating state 305, the positioning module may store its own position and transmit correction data to a UE operating in the target operating state or other node configured to estimate the position of the UE operating in the target operating state.

The state control module 504 may comprise a trigger identifier 508, a selector 510 and an operating state module 512.

The trigger identifier 508 may receive input data from various sources, including, for example, signals from the transceiver 506 and/or data from the positioning module 502. The trigger identifier 508 may be configured to identify one or more trigger events of the type or types mentioned above. For example, the trigger identifier 508 may identify one or more request messages from another UE for the UE 500 to transition to a target operating state 303, an anchor operating state 304 or a PRU operating state 305.

The trigger identifier 508 may forward an indication of any such identified trigger event or events at a given time or over a predetermined recent time window to the selector 510. In some examples, the trigger identifier 508 may comprise a part of the selector 510.

The selector 510 may receive an indication of identified trigger event(s) from the trigger identifier 510 and the current operating state of the UE 500.

The current operating state of the UE 500 may be stored or otherwise recorded by the operating state module 512, which may comprise any suitable form of memory device or register.

The selector 510 may select a different operating state to the current operating state stored in the operating state module 512. The selector 510 may signal or otherwise indicate the selected different operating state to the positioning module 502.

In response, the positioning module 502 may change its operating state to the selected operating state. For example, the selector 510 may cause the positioning module 502 to change its operating state by means of sending one or more control messages.

The positioning module 502 may therefore change its operation to act as, for example, a target UE, anchor UE, PRU UE or in a standby operating state 306.

The operating state module 512 may be updated and stored, either by the selector 510 or the positioning module 502, and the updated operating state becomes a new input to the selector 510 in a subsequent iteration.

The selector 510 may select the different operating state based on one or more criteria, or predetermined rules, possibly including, at least in part, the above-mentioned predetermined priority order associated with the operating states 303 - 306.

In some examples, upon selection by the selector of the different operating state, one or more predetermined procedures may be performed which may involve checks associated with the selected operating state prior to transition.

Transition by the positioning module 502 to the selected operating state may be conditional on said checks.

If said checks are not passed, then an alternative selection may be performed, as will become clear from the below examples.

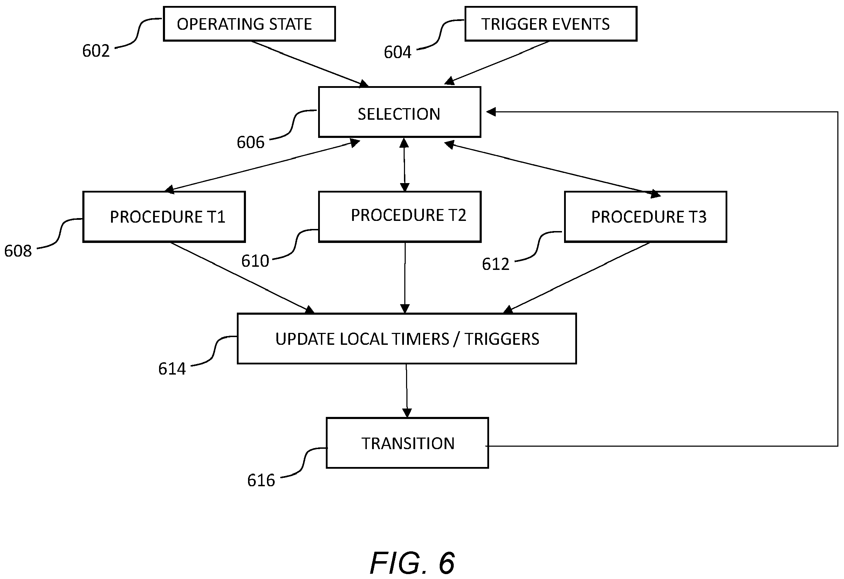

FIG. 6 is a diagram indicative of inputs and outputs to the selector 510.

As indicated previously, a current operating state 602 and one or more trigger events 604 may provide inputs to the selector 510.

The selector 510 may perform a selection operation 606 based on said inputs to select a different operating state and apply an associated one of, in this case, three predetermined procedures 608, 610, 612.

Each of the three procedures 608, 610, 612 may involve one or more checks which may need to be verified in order for the transition to take place.

The checks may be based on various criteria, for example based on one or more local timers associated with one or more of the three procedures 608, 610, 612.

If not passed, a different one of the operating states may be selected by the selector 510 and the associated procedure performed before a selected operating state can be finalised, i.e. before transition can take place.

Subsequent to a selected operating state being finalised, local timers and/or other trigger events can be updated at the particular UE and the positioning module 502 may effect the transition to start operating in the different operating state.

The process may be repeated iteratively upon receipt of one or more new trigger events within a positioning session of the particular UE.

Particular examples will now be described with reference to the UE 500, although it will be appreciated that the following can equally be applied to other UEs, such as the first to fifth UEs 210 - 214 shown in FIG. 2.

For example, if one or more trigger events explicitly or implicitly request or require the UE 500 to transition from the target operating state 303 to one of the anchor or PRU operating states 304, 305, the selector 510 may provisionally select said anchor or PRU operating state.

This may cause a first procedure 608 to be performed. The first procedure 608 may be associated with "transition from target operating state to anchor or PRU operating state."

According to the first procedure 608, the UE 500 may commit that upon completion of its own target positioning session (i.e. once its own position has been determined) it may transition to the anchor or PRU operating state 304, 305 within a service period of Y seconds from said completion of said target positioning session.

The value of *Y* may be computed by the UE 500, for example based on one or more of (e.g., a function of): the duration of the target positioning session, the number of positioning requests it generated in the last *X* seconds, target location accuracy, how fast the UE is moving and channel busy ratio. Other parameters may be used in the computation.

The value of *Y* may be reset when the UE 500 transitions back to the target operating state from a different operating state.

For example, in an example embodiment, the value of *Y* may be a function of:
- the duration that the UE 500 spent being in the current target positioning state (a maximum latency of 100 ms is normal in most cases, i.e. the UE should acquire its location within 100 ms); and
- how fast the UE is moving, because Y should not be longer than, say, the coherence time of the channel for this UE because the UE cannot guarantee that its position will not change.

For example, the value of *Y* may be the minimum of the two values.

In this case, the UE 500 may explicitly or implicitly pre-agree to accept future anchor and/or PRU operating states upon completion of its own target positioning session. In some examples, the UE 500 may explicitly announce a preference and/or availability of transitioning to either the anchor and/or PRU operating states 304, 305 when configuring its own target positioning session.

For example, if one or more trigger events explicitly or implicitly request or require the UE 500 to transition from the anchor or PRU operating states 304, 305 to a different operating state, the selector 510 may provisionally select said different operating state.

This may cause a second procedure 610 to be performed. The second procedure 610 may be associated with "transition from anchor or PRU operating state."

According to the second procedure 610, the UE 500 may release itself from performing a positioning assistance function if, for example, it has been in the anchor or PRU operating states 304, 305 for a total duration of *Z* seconds during the last *X* seconds.

The UE 500 may keep track of its total activity time and send an auto-release message to peer UEs for signaling its unavailability for performing anchor or PRU roles in the next *K* seconds.

Alternatively, or additionally, a network node, e.g. an LMF, may keep track and release the UE 500 from performing anchor or PRU roles in the next *K* seconds by updating correction or assistance data of the said UE.

Alternatively, or additionally, the UE 500 may accept an extension to its current anchor or PRU role or a switch to different role, if the UE has acted in the anchor operating state 304 or the PRU operating state 305 for less than *Z* seconds.

Selection of the different operating state may be coordinated by the UE 500 itself (and possibly validated by the peer Ues in case of transition to PRU) or by a network node if there is coverage.

For example, if one or more trigger events explicitly or implicitly request or require the UE 500 to transition from the standby operating state 306 to a different operating state, the selector 510 may provisionally select said different operating state.

This may cause a third procedure 612 to be performed. The third procedure 612 may be associated with a "transition from standby operating state."

According to the third procedure 612, the UE 500 may transition from the standby operating state 306 to, for example, the anchor operating state 304 or the PRU operating state 305 responsive to identifying a trigger event from another UE, or a network node, requesting or requiring the UE to operate as, an anchor UE or a PRU UE. For this purpose the UE 500 may in the standby operating state 306 advertise or broadcast its availability to transition to the anchor operating state 304 or the PRU operating state 305.

The UE 500 may transition to the standby operating state 306 in the event that the current operating state is one of the target, anchor and PRU states 303, 304, 305, and in the absence of one or more trigger events representing a request or requirement to transition to a different one of said states.

In some examples, the UE 500 when in the standby operating state 306 may automatically be released from transitioning to any active positioning state, e.g. transitioning to any of the anchor and PRU states 303, 304, 305 if the UE has been in the anchor operating state or the PRU operating state for a total duration of *Z* seconds within the previous *X* seconds.

The UE 500 may however transition to the target operating state 303 if requested or required based on one or more other trigger events.

More detailed examples based on the above will now be described.

At the UE 500, a number of local timers (e.g. clocks or counters) may be provided for ensuring a fair allocation of transitions and operating states 303, 304, 305, 306 over a service period *Y.*

The local timers may run within a service period *Y* and reset at the end of the service period *Y* so that the process can be re-performed the next time the UE 500 transitions to the target operating state 303.

For example, the UE 500 may provide and maintain the following local timers:
- *Da* is a total duration for which the particular UE 500 has operated in the anchor operating state 304.
- *Damax* is a maximum duration for which the UE 500 should operate in the anchor operating state 304.
- *Dp* is the total duration for which the UE 500 has operated in the anchor operating state 305.
- *Dpmax* is the maximum duration for which the UE should operate in the PRU operating state 305.
- *Cmax* is a total number of transitions to anchor or PRU operating states 304, 305 that the UE 500 can perform within a service period Y. Put another way *Cmax* is the total number of other UE's positioning sessions the UE 500 should assist with.

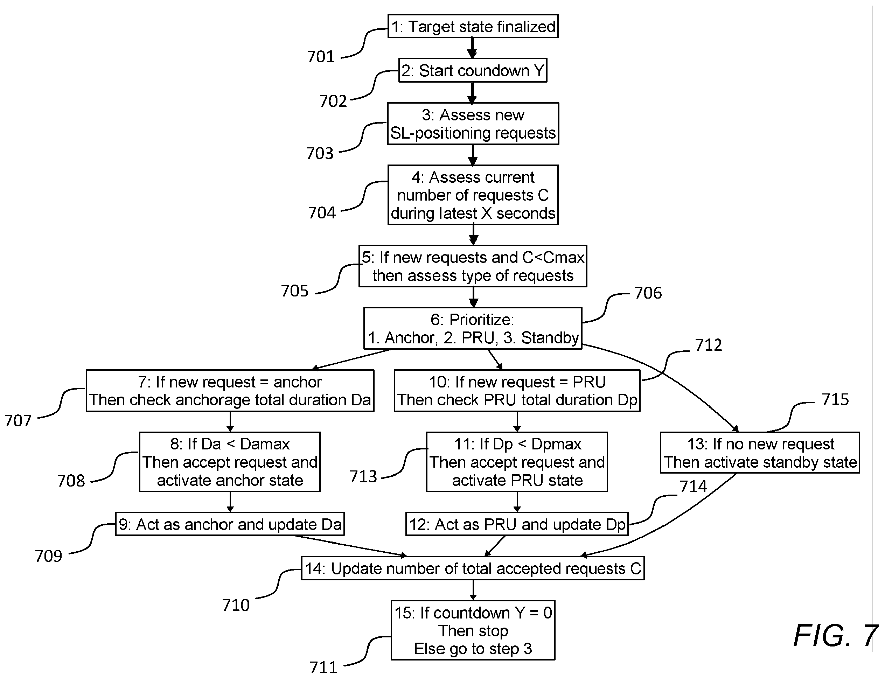

With reference to FIG. 7, which is another flow diagram according to example embodiments, the UE 500 may operate in the target operating state 303 as part of a target positioning session involving communication with one or more other peer UEs.

In an operation 701, the predetermined service period *Y* may commence when the position of the UE 500 is finalized or determined.

In an operation 702, a timer counting down from *Y* (or alternatively counting up to *Y*) may start.

In an operation 703, the UE 500 may assess or identify any trigger events, for example any new sidelink positioning requests.

In an operation 704, the UE 500 may determine, by means of a first counter *C,* a value indicative of a number of transitions, or requests to transition, to any of the anchor or PRU operating states 304, 305 within a predetermined time window *X* of the predetermined service period *Y,* e.g. within the last *X* seconds of *Y.*

In an operation 705, the UE 500 may determine if the number of new trigger events assessed or identified in the operation 704, to transition to any of the anchor or PRU operating states 304, 305 plus the value of the first counter *C* will meet or exceed *Cmax.*

If the value of *Cmax* will be met or exceeded, the UE 500 may wait for a period of time before re-assessing operations 704, 705 and in the meantime the UE may maintain its current operating state or transition to the standby operating state 306.

If the value of *Cmax* will not be met or is exceeded, i.e. if *C*≤ *Cmax* then in an operation 706 a prioritization process may be performed.

For example, if there is only one request or requirement to transition to one of the target, anchor or PRU operating states 303, 304, 305 then this operation may be bypassed.

For example, if there are respective requests or requirements to transition to two or more of the target, anchor or PRU operating states 303, 304, 305 then the predetermined priority order described above is applied.

In an operation 707 it may be assumed that a request or requirement to transition to the anchor operating state 304 has been identified. In this case, the current value of *Da* is obtained.

In an operation 708, it is checked if *Da* ≤ *Damax.* If so, the transition to the anchor operating state 304 is accepted and the process moves to an operation 709.

If not, then a next request in the predetermined priority order may be assessed, e.g. a request to transition to the PRU state 305 or, if none, the UE 500 may transition to the standby operating state 306.

In an operation 709, the UE 500 may transition to the anchor operating state 304. The value of *Da* is updated during a subsequent time period that the UE 500 acts as an anchor UE for one or more peer nodes.

In an operation 710, the value of C may be updated.

In an operation 711, if the predetermined service period *Y* has been exceeded, e.g. if *Y* = *o* then the process may terminate. Otherwise, the process may return to the operation 703 above for one or more other requests or requirements to transition.

In an operation 712, it may be assumed that a request or requirement to transition to the PRU operating state 712 has been identified or operation 708 is not met. In this case, the current value of *Dp* is obtained.

In an operation 713, it is checked if *Dp* ≤ *Dpmax.* If so, the transition to the PRU operating state 305 is accepted and the process moves to an operation 714.

If not, then the UE 500 may transition to the standby operating state 306.

In an operation 714, the UE 500 may transition to the PRU operating state 305. The value of *Dp* is updated during a subsequent time period that the UE 500 acts as a PRU UE for one or more peer nodes.

In an operation 710, the value of *C* may be updated as before.

In an operation 711, if the predetermined service period *Y* has been exceeded, e.g. if *Y* = *o* then the process may terminate. Otherwise, the process may return to the operation 703 above for one or more other requests or requirements to transition.

In an operation 715, if no requests to transition to the anchor or PRU operating states 304, 305 were identified in the operation 703, the UE 500 may transition to the standby operating state 306.

In an operation 710, the value of *C* may be updated as before.

In an operation 711, if the predetermined service period *Y* has been exceeded, e.g. if *Y* = *o* then the process may terminate. Otherwise, the process may return to the operation 703 above for one or more other requests or requirements to transition.

Note that the UE 500 may transition back to the target operating state 303 at any time, e.g. due to an internal request or requirement from a higher layer (application layer) or from one or more peer UEs. When this happens, the transition may be immediate if there is an indicated urgency, e.g. if latency requirements cannot otherwise be met, or the UE can delay its own localization and complete its current anchor or PRU operating roles if latency requirements allow.

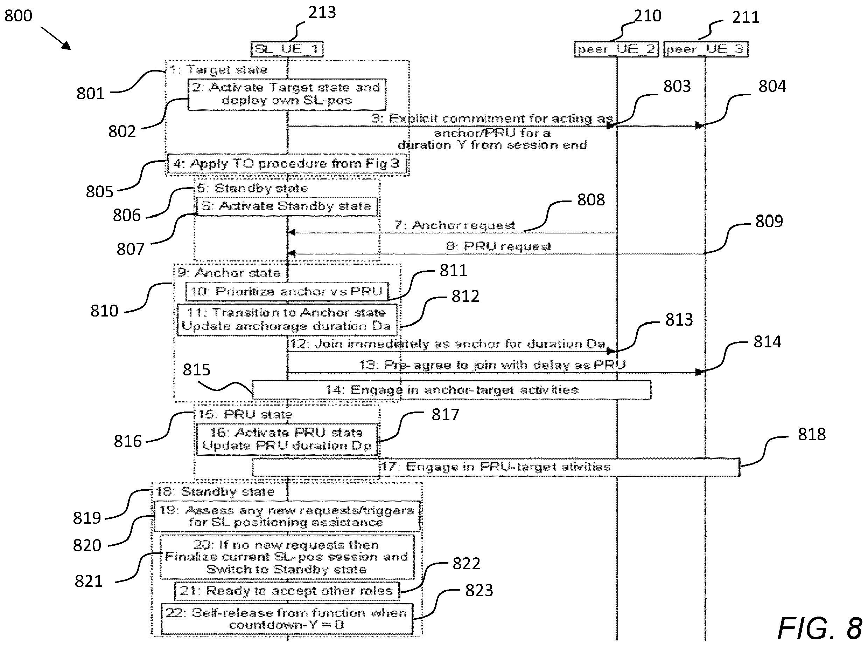

With reference to FIG. 8, one or more example embodiments will be described with reference to a signal timing diagram 800.

For example, the signal timing diagram 800 may relate to signalling between the third UE 213 shown in FIG. 2 with respect to the first and second UEs 210, 211, which are peer UEs in this context.

The signal timing diagram 800 may relate to a sidelink positioning process.

Reference numeral 801 may indicate that the third UE 213 is in the target operating state 303.

Reference numeral 802 may indicate that the target operating state has been activated, the position of the third UE 213 determined and hence a service period *Y* commences at the end of the target positioning session.

By signals 803, 804, the third UE 213 may advertise or broadcast, via respective sidelinks, to the first and second UEs 210, 211 that it may act in the anchor or PRU states 304, 305 for, or a number of times within, the service period *Y*.

At least some of the operations described above with reference to FIG. 7 may then be followed, as indicated by reference number 805.

For example, if there are no requests or requirements, i.e. trigger events, to transition to one of the anchor or PRU operating states 304, 305, the third UE 213 may transition to the standby operating state 306. This is represented by operation 806 which is activated in an operation 807.

By respective signals 808, 809 the third UE 213 may identify a request or requirement to transition to an anchor operating state 304, by the first UE 210, and to a PRU operating state 305 by the second UE 211.

In an operation 810 the third UE 213 may prioritise transition (operation 811) to the anchor operating state 304, which occurs in an operation 812 and the value of *Da* updated.

By a signal 813 the third UE 213 may then act in the anchor operating state 304 for at least the first UE 210 for a duration of, for example, *Da.* That is, reference signals may be communicated between the third UE 213 and the first UE 210 in the conventional manner.

In some examples, the third UE 213 may pre-agree to subsequently transition to the PRU operating state 305 for providing correction data for, for example, the second UE 211 (or another node that is estimating the position of the second UE), after it has completed its current role in the anchor operating state 304 for the first UE 210. This may be signalled by signal 814.

Reference numeral 815 indicates a period during which the third UE 213 acts in the anchor operating state 304 for at least the first UE 210.

Reference numeral 816 indicates that the third UE 213 subsequently transitions to the PRU operating state 305, which occurs in an operation 817 and the value of *Dp* updated.

Reference numeral 818 indicates a period during which the third UE 213 acts in the PRU operating state 305 for at least the second UE 211.

Reference numeral 819 indicates that, subsequent to completion of the PRU operating state 305, the third UE 213 may transition to the standby operating state 306.

In an operation 820, the third UE 213 may determine if there are any new one or more trigger events for transitioning. In an operation 821, if there are no identified new trigger events, the third UE 213 may transition to the standby operating state 306. In an operation 822, the third UE 213 may advertise or broadcast to peer UEs its availability or willingness to transition to either of the anchor or PRU operating states 304, 305.

In an operation 823, the third UE 213 may self-release itself from performing any other function when *Y* = *o*.

As described, UEs may individually transition themselves from a first operating state to a different operating state based, at least in part, on the presence or absence of one or more trigger events and on the first operating state. In this way, it is possible to manage at least allocation and/or deallocation of anchor UEs and PRU UEs in a certain way, for example to achieve a fair and resource-efficient allocation over time, without the need for a central entity such as an LMF to be in communication with, or aware of, all UEs in a certain geographical area. It may also help obtaining a critical mass of appropriately configured UEs within a positioning session, e.g. sufficient number of anchor UEs and PRU UEs, and may incentivize UEs to assist peer UEs.

### Example Apparatus

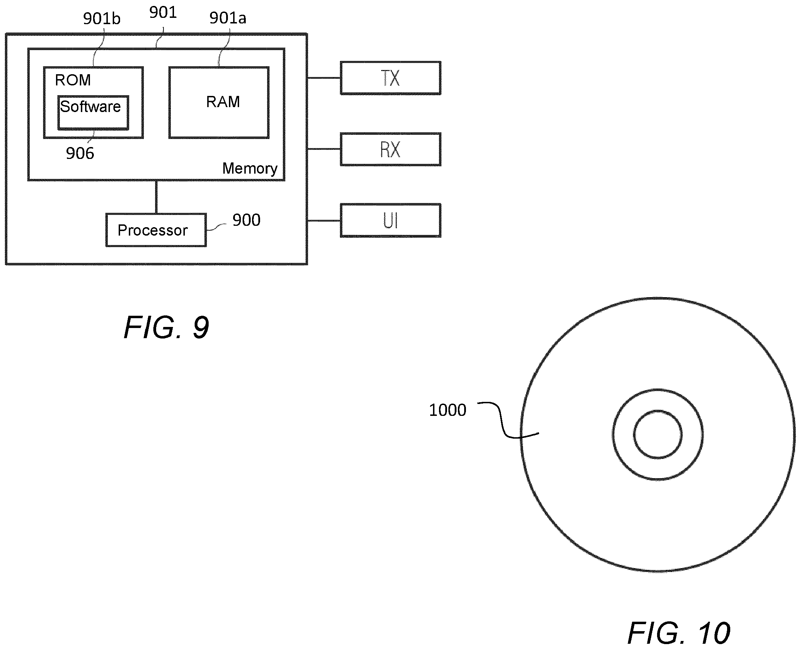

FIG. 9 shows an apparatus according to some example embodiments. The apparatus may be configured to perform the operations described herein, for example operations described with reference to any disclosed process. The apparatus comprises at least one processor 900 and at least one memory 901 directly or closely connected to the processor. The memory 901 includes at least one random access memory (RAM) 901a and at least one read-only memory (ROM) 901b. Computer program code (software) 906 is stored in the ROM 901b. The apparatus may be connected to a transmitter (TX) and a receiver (RX). The apparatus may, optionally, be connected with a user interface (UI) for instructing the apparatus and/or for outputting data. The at least one processor 900, with the at least one memory 901 and the computer program code 906 are arranged to cause the apparatus to at least perform at least the method according to any preceding process, for example as disclosed in relation to the flow diagram of any of FIGs. 4, 6, 7 and 8 and related features thereof.

FIG. 10 shows a non-transitory media 1000 according to some embodiments. The non-transitory media 1000 is a computer readable storage medium. It may be e.g. a CD, a DVD, a USB stick, a blue ray disk, etc. The non-transitory media 1100 stores computer program instructions, causing an apparatus to perform the method of any preceding process for example as disclosed in relation to the flow diagram of any of FIGs. 4, 6, 7 and 8 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:
means for operating the apparatus in a first operating state of a plurality of operating states as part of a positioning process involving communications with one or more remote nodes;
means for identifying one or more trigger events;
means for selecting a different one of the operating states, based at least on:
the first operating state, and
the presence or absence of one or more trigger events; and
means for transitioning from the first operating state to the selected different operating state;
wherein the plurality of operating states comprises at least a target state, an anchor state, a positioning reference unit -PRU- state, and a standby state.

2. The apparatus of claim 1, wherein,
at least one of the one or more trigger events represent, at least in part, a request from, or a requirement of, at least one of the one or more remote nodes

3. The apparatus of claim 1 or claim 2, wherein,
the selecting means is configured to select the different operating state based, at least in part, on a priority order associated with the plurality of operating states.

4. The apparatus of claim 3, wherein,
in the event that the first operating state is not the target state and the one or more trigger events represent at least:
a first request or requirement to transition to the target state, and
a second request or requirement to transition to a state other than the target state,
the selecting means is configured to prioritise transition to the target state over the other state or states.

5. The apparatus of claim 3 or claim 4, wherein,
in the event that the first operating state is the target state and the one or more trigger events represent at least:
a first request or requirement to transition to the anchor state, and
a second request or requirement to transition to the PRU state,
the selecting means is configured to prioritise transition to the anchor state over the PRU state.

6. The apparatus of any of claims 3 to 5, wherein,
in the event that the first operating state is one of the target, anchor and PRU states, and
in the absence of one or more trigger events representing a request or requirement to transition to a different one of said states,
the selecting means is configured to prioritise transition to the standby state.

7. The apparatus of claim 6, wherein the apparatus is configured, in the standby state, to advertise to the one or more other remote nodes its availability to transition to one of the other operating states.

8. The apparatus of any preceding claim, wherein,
the selecting means is configured to select a different state, of the plurality of operating states, at a plurality of different times within a service period *Y.*

9. The apparatus of claim 8, further comprising:
means for determining the service period *Y* substantially at the end of a positioning session in which the apparatus operated in the target state and its position has been determined.

10. The apparatus of claim 8 or claim 9, further comprising:
means for determining a first counter C indicative of a number of transitions to any of the anchor and PRU states within a time window *X* of the service period *Y,* and wherein
the transitioning means is configured to transition to a selected anchor state or a selected PRU state if the value of the first counter *C* does not exceed a maximum value *Cmax.*

11. The apparatus of any of claims 8 to 10, further comprising:
means for determining a second counter *Da* indicative of a time period in which the apparatus has operated in the anchor state in the service period *Y,* and wherein,
the transitioning means is configured to transition to a selected anchor state if the value of the second counter *Da* does not exceed a maximum value *Damax.*

12. The apparatus of any of claims 8 to 11, further comprising:
means for determining a third counter *Dp* indicative of a time period in which the apparatus has operated in the PRU state in the service period *Y*, and wherein,
the transitioning means is configured to transition to a selected PRU state if the value of the third counter *Dp* does not exceed a maximum value *Dpmax.*

13. The apparatus of any of claims 8 to 12, further comprising:
means for determining a fourth counter *Dap* indicative of a total time period in which the apparatus has operated in any of the anchor and PRU states within a time window *Z* of the service period *Y,* and wherein,
the transitioning means is configured to transition from the anchor state or the PRU state to the standby state if the value of the fourth counter *Dap* exceeds a maximum value *Dapmax.*

14. The apparatus of claim 13, wherein the transitioning means is further configured to prevent subsequent transition from the standby state to any of the anchor and PRU states within a window *K.*

15. The apparatus of any preceding claim, wherein the apparatus is a user equipment.
